(19) Europäisches Patentamt
European Patent Office
Office européen des brevets

(11) **EP 1 777 157 B1**

(12) **EUROPEAN PATENT SPECIFICATION**

(45) Date of publication and mention
of the grant of the patent:
**19.08.2009   Bulletin 2009/34**

(51) Int Cl.:
***B64F 5/00*** (2006.01)

(21) Application number: **06122436.6**

(22) Date of filing: **17.10.2006**

(54) **System and Method for Predicting Device Deterioration**

System und Verfahren zur Schädigungsvorhersage einer Vorrichtung

Système et procédé de prédiction d'une détérioration d'un dispositif

(84) Designated Contracting States:
**DE GB**

(30) Priority: **18.10.2005   US 728283 P**
**28.02.2006   US 363621**

(43) Date of publication of application:
**25.04.2007   Bulletin 2007/17**

(73) Proprietor: **HONEYWELL INC.**
**Morristown NJ 07960 (US)**

(72) Inventors:
• **Shetty, Pradeep K.**
**KA 560076, Bangalore (IN)**

• **Mylaraswamy, Dinkar**
**MN 55418, Fridley (IN)**
• **Ekambaram, Thirumaran**
**KA 560076, Bangalore (IN)**

(74) Representative: **Haley, Stephen**
**Gill Jennings & Every LLP**
**Broadgate House**
**7 Eldon Street**
**London EC2M 7LH (GB)**

(56) References cited:
**EP-A- 1 705 542**          **GB-A- 2 345 343**
**US-A- 5 210 704**          **US-A1- 2005 049 832**

**Description**

This invention generally relates to diagnostic systems, and more specifically relates to prognosis systems for mechanical systems.

Modem mechanical systems can be exceedingly complex. The complexities of modem mechanical systems have led to increasing needs for automated prognosis and fault detection systems. These prognosis and fault detection systems are designed to monitor the mechanical system in an effort to predict the future performance of the system and detect potential faults. These systems are designed to detect these potential faults such that the potential faults can be addressed before the potential faults lead to failure in the mechanical system.

One type of mechanical system where prognosis and fault detection is of particular importance is aircraft systems. In aircraft systems, prognosis and fault detection can detect potential faults such that they can be addressed before they result in serious system failure and possible in-flight shutdowns, take-off aborts, delays or cancellations.

Some current prognosis and fault detection techniques have relied upon modeling of the mechanical system to predict future performance and detect likely faults, see the GB 2 345 343 and the non-prepublished EP 1 705 542. One limitation in these techniques has been the failure of the models to adequacy account variations in the rate that components degrade. Furthermore, the models have failed to account for effects of dependencies between components in determining how components degrade. In both cases, the limitations in the model reduce the ability to predict future performance and detect likely faults in the mechanical system.

Thus, what is needed is an improved system and method for modeling components in a mechanical system and predicting device deterioration in those mechanical systems.

The present invention provides a system for predicting deterioration in a mechanical device according to claim 1. The deterioration prediction system and method includes a dynamic model of the mechanical device and a state estimator to predict deterioration in a mechanical device. The dynamic model includes a plurality of evolving health states that describe the performance of the mechanical device. The dynamic model can be implemented such that several distinct factors contribute the evolution of the health states. These factors can include damage accumulation, interaction between components in the device, deviation from design conditions, and the influence of discrete events. The dynamic model uses a Poisson distribution to model the rate of damage accumulation in the mechanical device.

The state estimator uses the dynamic model and device data from the mechanical device to estimate the states of the dynamic model. The estimated states of the dynamic model can then be used to calculate the current deterioration in the mechanical device, and to predict future deterioration in the mechanical device. Specifically, the system and method drives the model using a non-Gaussian input that switches according to discrete events in the mechanical device. The resulting states of the dynamic model can then be used to evaluate deterioration in the mechanical device. Thus, when the states reach a predefined threshold the deterioration may be sufficient to justify corrective action. Furthermore, the state estimator can predict future deterioration by estimating future states in the health model. In one example, the system and method estimates future states of the model by integrating to a select future time. Thus, the state estimator can be used to determine a repair window in which corrective action should be taken in anticipation of predicted future deterioration.

The dynamic model uses a Poisson distribution to model the rate of damage accumulation in the mechanical device. The Poisson distribution provides the ability to accurately model the increase in damage accumulation that occurs over time in the mechanical device. The state estimator uses a modified Kalman filter to estimate the state of damage accumulation in the mechanical device. Specifically, the Kalman filter is modified to produce an estimate of accumulated damage based on the Poisson distribution of the damage accumulation rate. This estimation is valid up to the second moment in the Poisson distribution. Thus, the Kalman filter can be used to estimate the current state of damage accumulation in the device. When the current state has been estimated, the future state of damage accumulation can be predicted by integrating to a future time. Thus, the state estimator can be used to determine when deterioration is predicted to justify removal and/or repair of the mechanical device.

The foregoing and other objects, features and advantages of the invention will be apparent from the following more particular description of a preferred embodiment of the invention, as illustrated in the accompanying drawings.

In the Drawings;

The preferred exemplary embodiment of the present invention will hereinafter be described in conjunction with the appended drawings, where like designations denote like elements, and:

FIG. 1 is a schematic view of a deterioration prediction system;

FIG. 2 is a schematic view of a model creation technique in accordance with an embodiment of the invention;

FIG. 3 is a schematic view of a deterioration prediction technique in accordance with an embodiment of the invention;

FIGS. 4 and 5 are graphical representations of observed data and resulting estimated health vectors; and

FIG. 6 is schematic view of an exemplary computer system implementing a deterioration prediction system in accordance with an embodiment of the invention.

The present invention provides a system for predicting deterioration in a mechanical device. The system uses a dynamic model and state estimator to predict deterioration in a mechanical device. The dynamic model includes a plurality of evolving health states that describe the performance of the mechanical device. The state estimator estimates the states of the dynamic model using periodic observations of the mechanical device and uses the estimation of the states to predict when the states will reach a predefined threshold that is sufficient to justify removal and/or repair of the mechanical device.

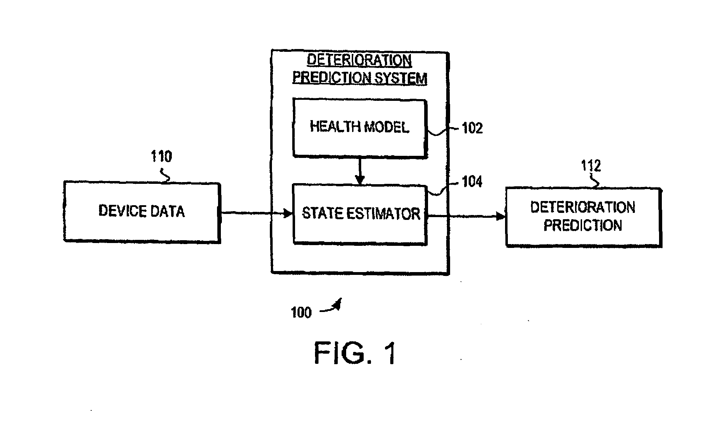

Turning now to FIG. 1, a schematic view of a deterioration prediction system 100 is illustrated. The deterioration prediction system 100 includes a health model 102 and a state estimator 104. The deterioration prediction system 100 receive device data 110 from the mechanical device under evaluation, and generates a deterioration prediction 112 based on the device data 110 and the health model 102. The health model 102 comprises a dynamic model that includes a plurality of evolving health states. These health states together describe the performance of the mechanical device. Several factors contribute to the evolution of the health states. These factors include damage accumulation, interaction between components in the device, deviation from design conditions, and the influence of discrete events.

The state estimator 104 uses the health model 102 and the device data 110 from the mechanical device to estimate the states of the dynamic health model 102. The estimated states of the dynamic model can then be used to calculate the current deterioration in the mechanical device, and to predict future deterioration in the mechanical device, Specifically, the state estimator 104 drives the health model 102 using a non-Gaussian input that switches according to discrete events in the mechanical device, The resulting states of the dynamic health model 102 can then be used to evaluate deterioration in the mechanical device. In this respect, the states of the dynamic health model 102 are described as a stochastic (or random) variables and the state estimator 104 is used to estimate the mean and the variance of these stochastic variable. Thus, when the states reach a predefined threshold the deterioration may be sufficient to justify corrective action. Furthermore, the state estimator 104 can predict future deterioration by estimating future states in the health model 102. In one example, the system and method estimates future states of the health model 102 by integrating to a select future time. Thus, the state estimator 104 can be used to determine a repair window in which corrective action should be taken in anticipation of predicted future deterioration.

In one specific embodiment, the dynamic health model 102 uses a Poison distribution to model the rate of damage accumulation in the mechanical device. The Poisson distribution provides the ability to accurately model the increase in damage accumulation that occurs over time in the mechanical device, *e.g.*, the age dependent deterioration in the device. In this embodiment, the state estimator 104 can use a modified Kalman filter to estimate the state of damage accumulation in the mechanical device. Specifically, the Kalman filter is modified to produce an estimate of accumulated damage based on the Poisson distribution of the damage accumulation state. This estimation is valid up to the second moment in the Poison distribution. Thus, the Kalman filter can be used to estimate the current state of damage accumulation in the device. When the current state has been estimated, the future state of damage accumulation can be predicted by integrating to a future time. Thus, the state estimator 104 can be used to determine when deterioration is predicted to justify removal and/or repair of the mechanical device.

As stated above, the health model 102 comprises a dynamic model that includes a plurality of evolving health states. These health states together describe the performance of the mechanical device. Several factors contribute to the evolution of the health states. These factors include damage accumulation, interaction between components in the device, deviation from design conditions, and the influence of discrete events. In general, the feasibility of prognosis will depend on how accurately the above factors are captured in the model. However, it should also be noted that as the complexity of a model increases, the difficulty in extracting values for the states in the model based on data from the device also increases.

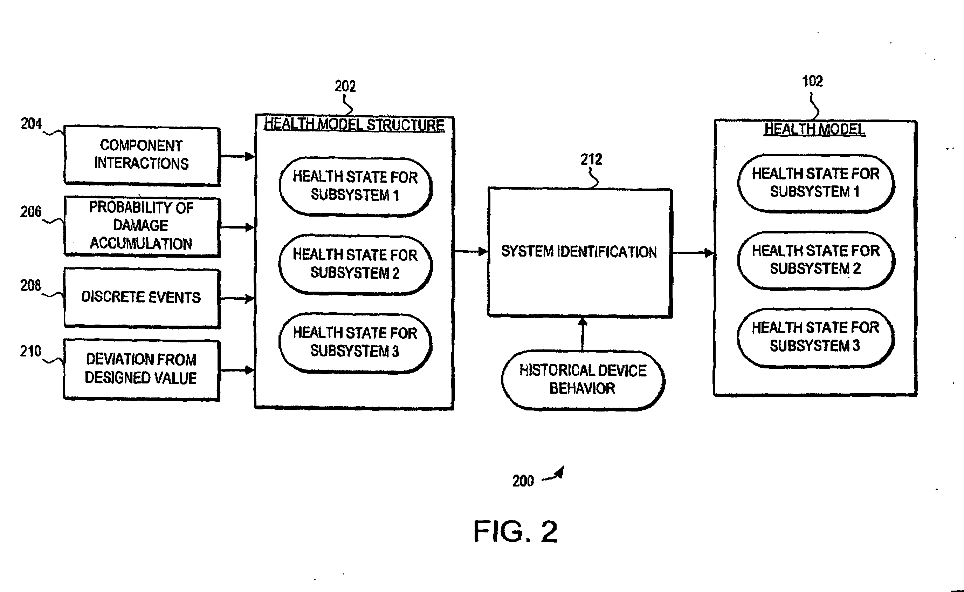

Turning now to FIG. 2, a schematic view of an exemplary technique 200 for creating a health model is illustrated. In general, the technique 200 generates a health model 102 using a variety of inputs, historical device behavior and system identification, As described above, the health model 102 includes a plurality of evolving states. In the illustrated example, the plurality of evolving health states comprises health states for a three subsystems, *i.e.,* subsystem 1, subsystem 2, and subsystem 3 in a gas turbine engine. In the exemplary technique 200, four main inputs are used to define a health model structure 202. These inputs include component interactions 204, probability of damage accumulation 206, discrete events 208 and deviation from designed value 210. It should be noted that the number of health states in a health model, and the inputs used to define the health model structure can vary depending on the implementation used.

The inputs are used to define a health model structure 202. The health model structure 202 includes the plurality of health states that each describe the health of a subsystem. For example $x_1$, $x_2$, and $x_3$ and could represent the health of the subsystems 1, 2 and 3 respectively. Together, the health states $x_1$, $x_2$, and $x_3$ comprise a multifaceted health vector x(t). Again, this is just one example, and a typical health model structure 202 could include more or less health states, Irrespective of the dimensionality, the health vector x should satisfy the two properties to ensure physical significance. Firstly, the probability of a mechanical device in healthy condition, having known the x to be more than a threshold should tend to 1. Secondly, the probability of the occurrence of a failure mode, having known that x is below a threshold, should tend to 1.

The inputs 204, 206, 208 and 210 are contributors that together define the health model structure, In one example of the dynamic health model, the contributors are additive and can be expressed as:

$$\dot{x}(t) = Ax(t) + B\sum_{k=1}^{m}\left(u^k(t) - u^{k,0}(t)\right) + diag(\beta_t)(\theta(t) + Cv(t)$$

$$y(t) = x(t) + \varepsilon(t) \qquad\qquad (1.)$$

$$\theta \sim P(\lambda); \varepsilon \sim N(0, R)$$

Where $x(t)$ is the health vector and $\dot{x}(t)$ is the vector rate of change of the health vector, $A$ is an $n \times n$ system matrix, $B$ is an $n \times p$ system matrix, $diag(\beta)$ is an $n \times n$ diagonal matrix, and C is an $n \times r$ event sensitivity matrix, The indices N, P and R are respectively the dimension of health vector, input and events under consideration. Specifically $(u^k(t) - u^{k,0}(t))$ is the deviation in the operating condition $u^k(t)$ at the $k^{th}$ mode from the design condition $u^{k,0}$. Observation vector $y(t)$ corresponds to the periodic device data obtained from the device at the end of $t^{th}$ cycle, The derivation of matrices A, B and C will be discussed in greater detail below. In the model of equation 1, intrinsic deterioration is modeled as a Poisson process with constant properties. Specifically, $\theta$ is a random variable that follows a Poison distribution with a parameter $\lambda$. Also, $\varepsilon$ is a measurement noise that follows a normal distribution.

It should be noted that the component interactions input 204 of FIG. 2 corresponds to the matrix A or the first term on the right hand side of equation 1. Likewise, the probability of damage accumulation input 206 corresponds to the third term of equation 1. The second term corresponds to the contribution made by deviation in the operating condition at 'm' modes or input 210. Matrix B is the weight or the sensitivity of this deviation. The discrete events input 208 corresponds to matrix beta or the third term of equation 1, Finally, the deviation for designed value input 208 corresponds to matrix C or the fourth term of equation 1.

Thus, the health model defined in equation 1 uses system matrices A and B to define specific instantiations of the health model. In general, a system matrix A defines the memory of the system, *i.e.,* how the current state of the system depends on the previous states. In addition, the non-diagonal elements of matrix A define the interaction between two or more components within the system. In one specific example, x is a 2-dimensional vector describing the health of the hot section and the load section of a gas turbine engine. In this example, the off-diagonal elements of matrix A define the health interaction between the hot and the cold section of the engine. In another example the hot and the load sections are assumed to be decoupled or non-interacting. This example would be modeled with a diagonal matrix A where are the other elements of the matrix are zero.

The system matrix B defines the sensitivity of the system to deviation from the design envelope $u^{k,0}$. In one specific example we define two modes within each operating cycle of a gas turbine engine, hence $k = 1, 2$. $u^{1,0}$ defines the design conditions like throttle setting, electrical load and altitude at engine idle, $u^{2,0}$ while defines the design conditions at max power. Failure of the gas turbine engine to operate at these design conditions during the $k'th$ cycle produces a penalty proportional to $(u^k(t) - u^{k,0})$ which alters the rate of evolution of the health states. The matrix B is thus the sensitivity of the above mentioned deviation on the rate of evolution of the health states. In one specific example, matrix B is zero. In this example, the health states are not influenced by deviations from the design conditions. In one specific example, if the device operated at the design condition at the $k^{th}$ mode, there is no penalty. In one specific example the penalty from mode 1 can be different from the penalty at mode 2. For example, a non-zero B matrix would be used when the penalty for deviating from the design condition at max power (mode 1) may be larger than the penalty for deviations at engine idle (mode 2).

Discrete events impacting the prognostic health state can result from line maintenance actions and/or abrupt faults within the system. An event can defined as abrupt action if the time duration between its initiation and manifestation is much smaller than the average cycle time. In simple terms, a fault is considered as a discrete event if the elapsed time between its initiation, and manifestation is much smaller than the duration of a typical cycle, The prognostic system does not differentiate between a line maintenance action and an abrupt fault. Both these result in a "DC" shift in the health vector.

In the example of the health model illustrated in equation 1, the "DC" shift in the state vector trajectory (sequence of *x(t)*) is taken as event sensitivity matrix C. To obtain this matrix, the normalized observation sequence *(y)* is denoised using a suitable digital filter and the jump in the observation vector at the occurrence of the event is calculated, which is then considered as event sensitivity. So determined, the matrix C determines the sensitivity of the health vectors to discrete events, such as abrupt faults of line maintenance actions. In one example, discrete events like oil cooler replacement and bleed duct rupture are considered while modeling health vectors related to a gas turbine engine, making v(t) a 2-dimensional vector. In other embodiments the model be designed to ignore the influences of line maintenance, and in those cases the matrix C can be omitted from the health model.

With the health model structure 202 defined, system identification 212 can be used to define a specific instance of the health model that corresponds to a particular device or type of device. In general, system identification 212 involves using historical device behavior to determine appropriate values for the system matrices that define interactions between states in the health model. In the specific example illustrated in equation 1, this involves determining appropriate values for matrices A and B. A variety of system identification can be used to determine the system matrices A and B. For example, they can be determined using least squares regression and/or maximum likelihood estimation technique. This generally involves using a high computation technique that is performed digitally by representing equation 1 discretized as:

$$x(t+1) = Ax(t) + B\sum_{k=1}^{m}\left(u^k(t) - u^{k,0}\right) + diag(\beta_i)\theta(t) + Cv(t) \quad (2.)$$

$$y(t) = x(t) + \varepsilon(t)$$

In one embodiment, the state vector and system matrix are estimated using uniform sampling criterion. This involves initialization of the system matrix and state vector, identification of system matrix A and B, estimation of state vector. For example, a least squares regression (LSR) technique can be used to initialize matrix A and B. The LSR technique starts with initializing the system matrix A and B. In one embodiment these matrices are initialized using random numbers between -1 and 1. The state vector is also initialized. In one example, the state vector is initialized to *y(1)*. Given the initialization and using equation (2) one can obtain the expected observation. The cumulative square error of the actual and expected value is then minimized to get LSR estimates of A and B.

During this regression, an absence of other events is assumed. Thus, given a sequence of device observations *y(1), y(2), ... y(N)* and operating conditions at various modes $u^k(1), u^k(2), ... u^k(N)$ during which time there are no known discrete events, system matrix A and B are obtained by minimizing the joint error between multiple measurements. Absence of discrete events implies that *v(t)* will be identically zero for t = 1, 2, ... *N*.

In another embodiment, the system matrix A and B are obtained using maximum likelihood estimation technique. In this embodiment, a difference $e(t) \equiv (y(t) - \hat{y}(t))$ is defined as the innovation at *t*. In general, the magnitude of the innovation *e(t)* depends on the initial choice of matrix A, B and the value of state vector *x(t)*. This process is continued, repeating the above steps for cycles t=1 to N, while collecting the innovation sequence. Next, assuming that the innovations come from a multivariate Gaussian distribution and obtain the log likelihood function for the innovation sequence. Then the estimate for the system matrices can be obtained using:

$$\left[\hat{A}, \hat{B}\right] = \min_{A,B} L \quad (3.)$$

Where $\hat{A}, \hat{B}$ are the estimates of the system matrices A and B, and L is known as the log-likelihood function of the innovation. This value directly depends on the innovation sequence, hence, related to the state estimation with partially specified scheme. The initialization of the state vector *x(t)* and the state matrix A, B is important in obtaining accurate estimate of A and B.

The system dynamics may change with respect to time. In these cases it would generally be desirable to update system matrices A and B regularly. The frequency of the update of A and B would depend on a variety of factors. In one embodiment, a change in the distribution property of the innovation sequence can initiate re-calculation of the system matrix A and B. In another embodiment, major overhaul of the mechanical system may initiate re-calculation. For example, when the health model structure 102 is used to monitor a jet engine, the system matrices can be re-initiated every time the engine undergoes a major repair.

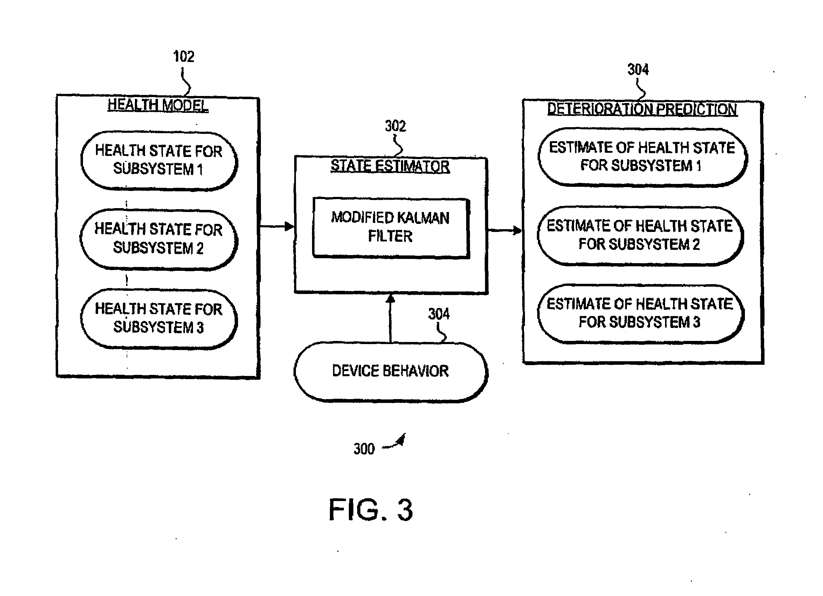

Thus, the technique 200 can instantiate a health model by creating a health model structure 200 and using least squares regression or maximum likelihood estimation technique to determine the system matrices for the model 102. With the model 102 so defined it can be used to predict deterioration in the mechanical device. Turning now to FIG. 3, a technique 300 for predicting deterioration in a mechanical device is illustrated, In general, the technique 300 uses device behavior 304 from the mechanical device to estimate the states of the dynamic health model 102. The resulting states of the dynamic health model 102 can then be used to evaluate deterioration in the mechanical device. Furthermore, the technique 300 can predict future deterioration by estimating future states in the health model 102.

In the technique 300, the state estimator 302 uses a modified Kalman filter. Specifically, the Kalman filter is modified to produce an estimate of accumulated damage based on the Poisson distribution of the damage accumulation state. This estimation is valid up to the second moment in the Poisson distribution. Thus, the Kalman filter can be used to estimate the current state of damage accumulation in the device. When the current state has been estimated, the future state of damage accumulation can be predicted by integrating to a future time. Thus, the state estimator 302 can be used to provide a deterioration prediction 304 that can be used to determine when to remove and/or repair the mechanical device.

To provide the deterioration prediction 304 the state estimator uses measured device behavior 304. This behavior can be measured using noisy sensors. Discrete events influencing the device are measured using external detection mechanism. These detection devices can range from simple threshold crossing to more complex multivariate pattern recognition algorithms. In one embodiment a linear Principal Components Analysis based observers are used to detect the events. A set of training samples are used to represent the normal condition and a measure is defined to detect bleed duct rupture events. In one of the embodiment the squared prediction error is taken as the measure and if it exceeds a predefined threshold, then event is presumed to have occurred, and is provided to the state estimator 302.

In one example, a 2-tuple clustering system is used to detect discrete events associated with turbine blade breakage. Such a system is described in US patent application 2005/0288901 by Dinkar Mylaraswamy et al, assigned to Honeywell International, Inc. In another example, a singular value decomposition is used to detect discrete events associated with bearing rubs. Such a system is described in US patent application 2005/0283909 to Dinkar Mylaraswamy et al, assigned to Honeywell International, Inc.

In one specific example, with the model defined as in equation 1, the state estimator 302 can be used to predict deterioration with the Mowing procedure:

$$Given: \left\{ y(t), u^k(t), v(t) \right\}_t \left\{ y(t-1), u^k(t-1), v(t-1) \right\}_t K$$
$$Settings: \lambda, R, \beta_t, u^{k,0} \qquad\qquad (4.)$$
$$Estimate: A, B, C, x(t), x(t+\delta_t)$$

Where ($t$-1) represents data from the previous cycle, ($t$-2) represents data from cycles in the past and $x(t+\delta_t)$ denotes the prediction of the health vector in the future within a prediction window $\delta$, having known $\{y(t), u^k(t), v(t)\}$.

The state estimator 302 can use a modified Kalman filter to estimate the state of damage accumulation in the mechanical device. In this framework, the state vector $x(t)$ is described by the first two moments and the prediction and updation equations of Kalman filter are re-derived using the concept of partially specified distributions. In this case, the random variable is transformed into another random variable and first two moments of the transformed random variable is used for deriving the Kalman equations. The recursive state estimation is performed in two steps, a state prediction using the value of the state at the previous time step and state updation using the new observation at the current time step.

With the rate of change determined using states in the model defined by equation 1, that rate of change can be used to predict future health of the mechanical system. In one example, the system and method estimates future states of the health model given by equation 1 by integrating to a select future time, with that time typically determined by the desired prognostic window. Since actual measurements are not available for the future, the future health state is instead be predicted by recursion of the state equation. Thus, the state estimator can be used to determine a repair window in which corrective action should be taken in anticipation of predicted future deterioration, The present formulation uses estimates of the future value of inputs and events for state prediction.

In one embodiment, a one-step-ahead prediction estimate In one embodiment, a one-step-ahead prediction estimate $\left( x'_{t+1} \right)$ can be given by:

$$Ax'_t + B\sum_{k=1}^{n} U^k{}_{t+1} + Cv_{t+1} + v \qquad (5.)$$

In the equation 5 the variable $v$ $x_t^t$ nothing but the updated state at time t, having the observation $y_t$. The variable $U_{t+1}^t$ is the-future input deviation, $v_{t+1}$ indicates the event at flight cycle (t+1) and $v$ indicates the first moment of partially specified distribution. The value $x_{t+1}^t$ is integrated to equation (5) to get the two step ahead prediction $x_{t+2}^t$. This step is repeated till a predefined prognostic window(M) and at each step the previous prediction estimates are integrated in the state equation to get the next future, estimates. In the current prediction as given in equation 5, one needs the future input deviations and events for predicting the health vectors. In one of the embodiment, future inputs remain the same as the most recent input deviation and no event occurs within the prognostic window. This means that,

$$U_{t+k}^t = U_t$$ and $v_{t+k} = 0$ for k=1.....M. The prediction estimates directly depend on the system matrix, hence, A and B matrices are re-identified before predicting the health.

Thus, the technique 300 provides for predicting deterioration in a mechanical device is illustrated using device behavior 304 from the mechanical device to estimate the states of the dynamic health model 102. The resulting states of the dynamic health model 102 can then be used to evaluate deterioration in the mechanical device predict future deterioration by estimating future states in the health model 102.

In one application, the deterioration prediction system is used to monitor a turbine auxiliary power unit (APU). An APU is a relatively small turbine engine used primarily for starting the propulsion engines, providing bleed air for the environment, and providing electricity to the aircraft. In general, the APU can be considered to the combination of two broad sub-systems, namely a hot section and a load section. The deterioration prediction system can then be used estimate the health of these two sections. This would involve the use of a two-dimensional health vector in the health model. In this application, the operating envelope is defined at max power, hence k = I. Specifically deviations from design conditions are calculated for ambient pressure, temperature, generator load and guide vane position. Periodic observations collected from the APU include exhaust gas temperature, bleed pressure, bleed flow and oil temperature.

In this example, the model for the APU a cycle may include the time interval between startup and shutdown, and modes within the cycle can include idling, acceleration, cruise and deceleration, The prognostic state at each cycle *t* evolves as a function of the operating conditions experienced at each operating mode within this cycle, intrinsic damage accumulation and discrete maintenance actions and faults that occurred.

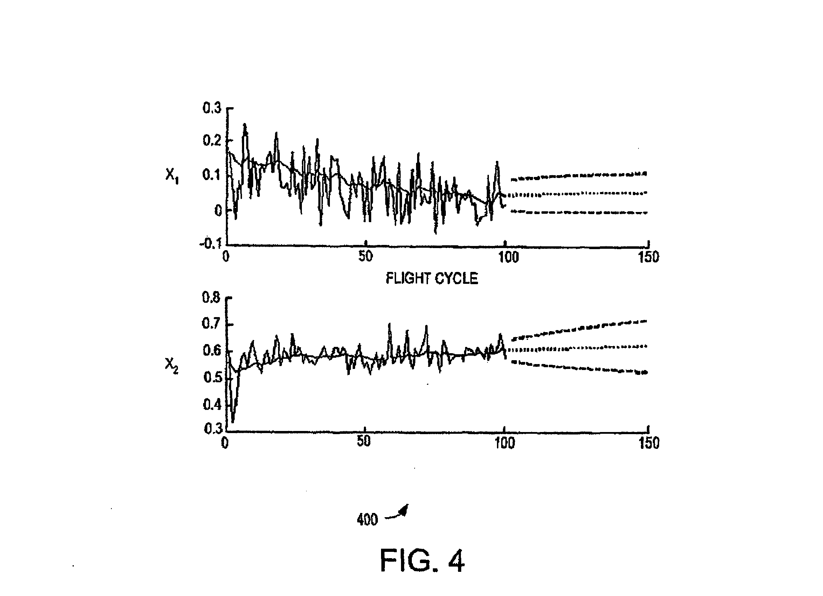

Turning now to FIG. 4, a graph 400 illustrates a graphical representations of observed data and resulting predicted health vectors $X_1$ and $X_2$ from an exemplary APU. The health vector $X_1$ represents the health of the load section of the APU, and the health vector $X_2$ represents the health of the hot section. The dotted lines indicate the predicted health and the dashed line indicates the 95% confidence cone for a prognostic window of fifty flight cycle. The solid smooth line indicates the estimated health. The random fluctuating signal is the observation sequence.

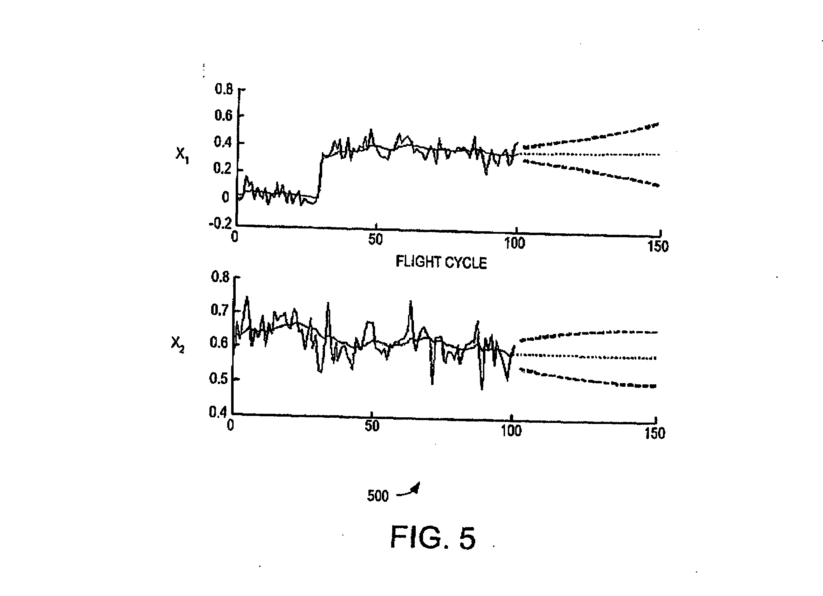

Turning now to FIG. 5, a graph 500 illustrates the prognostic system handling discrete events. The health vector $X_1$ represents the health of the load section of the APU, and the health vector $X_2$ represents the health of the hot section. A discrete event was occurred at time index thirty, which was correctly estimated by the estimator. The dotted lines indicate the predicted health and the dashed line indicates the 95% confidence cone for a prognostic window of fifty flight cycle. The solid smooth line indicates the estimated health. The random fluctuating signal is the observation sequence.

In one embodiment, the model of a typical mechanical system is hybrid in nature, meaning that the model considers both the continuous evolution of states and discrete jumps in states. Additionally, the model includes the health state *diag*(β) driven by a Poisson process. To solve the model, a maximum likelihood (ML) based estimator is used for system identification and recursive Bayesian state estimation.

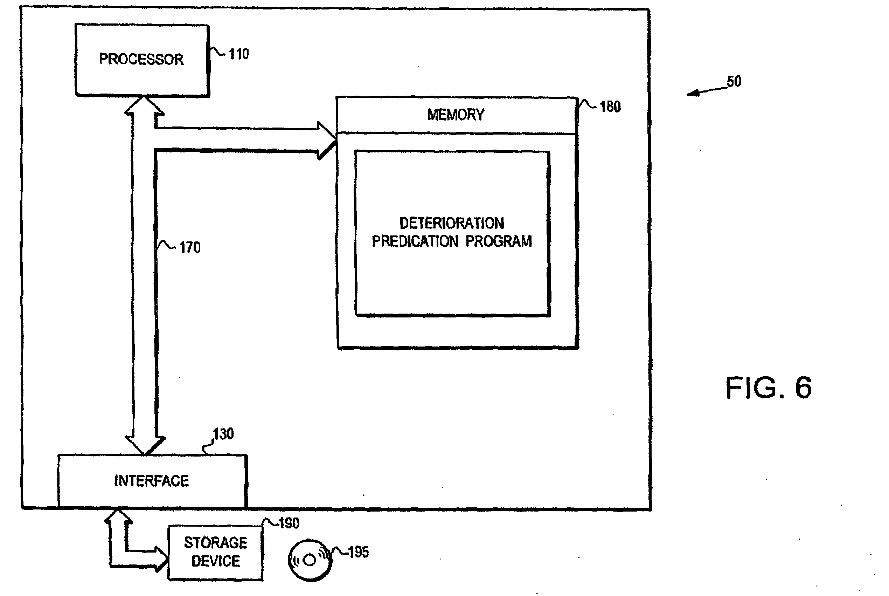

The deterioration prediction system and method can be implemented in wide variety of platforms, Turning now to FIG. 6, an exemplary computer system 50 is illustrated. Computer system 50 illustrates the general features of a computer system that can be used to implement the invention. Of course, these features are merely exemplary, and it should be understood that the invention can be implemented using different types of hardware that can include more or different features. It should be noted that the computer system can be implemented in many different environments, such as onboard an aircraft to provide onboard diagnostics, or on the ground to provide remote diagnostics. The exemplary computer system 50 includes a processor 110, an interface 130, a storage device 190, a bus 170 and a memory 180. In accordance with the preferred embodiments of the invention, the memory system 50 includes a deterioration prediction program.

The processor 110 performs the computation and control functions of the system 50. The processor 110 may comprise any type of processor, include single integrated circuits such as a microprocessor, or may comprise any suitable number of integrated circuit devices and/or circuit boards working in cooperation to accomplish the functions of a processing unit In addition, processor 110 may comprise multiple processors implemented on separate systems.

In addition, the processor 110 may be part of an overall vehicle control, navigation avionics, communication or diagnostic system. During operation, the processor 110 executes the programs contained within memory 180 and as such, controls the general operation of the computer system 50.

Memory 180 can be any type of suitable memory. This would include the various types of dynamic random access memory (DRAM) such as SDRAM, the various types of static RAM (SRAM), and the various types of non-volatile memory (PROM, EPROM, and flash). It should be understood that memory 180 may be a single type of memory component, or it may be composed of many different types of memory components. In addition, the memory 180 and the processor 110 may be distributed across several different computers that collectively comprise system 50. For example, a portion of memory 180 may reside on the vehicle system computer, and another portion may reside on a ground based diagnostic computer.

The bus 170 serves to transmit programs, data, status and other information or signals between the various components of system 100. The bus 170 can be any suitable physical or logical means of connecting computer systems and components. This includes, but is not limited to, direct hard-wired connections, fiber optics, infrared and wireless bus technologies.

The interface 130 allows communication to the system 50, and can be implemented using any suitable method and apparatus. It can include a network interfaces to communicate to other systems, terminal interfaces to communicate with technicians, and storage interfaces to connect to storage apparatuses such as storage device 190, Storage device 190 can be any suitable type of storage apparatus, including direct access storage devices such as hard disk drives, flash systems, floppy disk drives and optical disk drives. As shown in FIG. 6, storage device 190 can comprise a disc drive device that uses discs 195 to store data.

In accordance with the preferred embodiments of the invention, the computer system 50 includes a deterioration prediction program. Specifically during operation, the deterioration prediction program is stored in memory 180 and executed by processor 110. When being executed by the processor 110, deterioration prediction program receives data from the device being monitored and generates a deterioration prediction from that data.

As one example implementation, the deterioration prediction system can operate on data that is acquired from the mechanical system (*e.g.,* aircraft) and periodically uploaded to an internet website. The deterioration prediction analysis is performed by the web site and the results are returned back to the technician or other user. Thus, the system can be implemented as part of a web-based diagnostic and prognostic system.

It should be understood that while the present invention is described here in the context of a fully functioning computer system, those skilled in the art will recognize that the mechanisms of the present invention are capable of being distributed as a program product in a variety of forms, and that the present invention applies equally regardless of the particular type of computer-readable signal bearing media used to carry out the distribution. Examples of signal bearing media include: recordable media such as floppy disks, hard drives, memory cards and optical disks (e.g., disk 195), and transmission media such as digital and analog communication links.

**Claims**

1.  A deterioration prediction system (100) for predicting deterioration in a mechanical device, the system (100) comprising:

    a health model (102) for the mechanical device, the health model (102) including a plurality of health states adapted for modeling the mechanical device; and
    a state estimator (104) adapted to receive periodic device data for the mechanical device, the state estimator (104) further adapted to estimate values for the plurality of health states based on the device data, wherein the estimated values for the plurality of health states provide a prediction of deterioration in the mechanical device, the system being **characterised by**:

    the health model (102) using a Poisson distribution to model a rate of intrinsic damage accumulation in the mechanical device; and
    the state estimator (104) including a Kalman filter modified to utilize a partially specified distribution to produce an estimate of intrinsic damage accumulation for two moments of the Poisson distribution.

2.  The system (100) of claim 1, wherein the health model (102) is implemented to capture effects of damage accumulation and influence of discrete events on the mechanical device as additive variables, and wherein the influence of discrete events is captured by a combination of a sensitivity matrix and a binary variable that indicates when a discrete event has occurred.

3. The system (100) of claim 1, wherein health model (102) includes a system matrix to describe interactions between subsystems and wherein the system matrix is determined using maximum likelihood estimation.

4. The system (100) of claim 1, wherein health model (102) includes a system matrix to describe interactions between subsystems and wherein the system matrix is determined using least squares regression.

5. The system (100) of claim 1, wherein the health model (102) includes health states that evolve in linear state space described by a damage accumulation element, deviation from design conditions at each operating mode, and occurrence of discrete events.

6. The system (100) of claim 1, wherein the state estimator (104) estimates the mean and the variance of the health states within the health model (102) using periodic observations from the mechanical device, and wherein the periodic observations from the mechanical device include sensor measurements superimposed by Gaussian noise.

7. The system (100) of claim 1, wherein the state estimator (104) estimates future states of the health model (102) by integrating the health model (102) to a select future time.


**Patentansprüche**

1. Verschlechterungs-Vorhersagesystem (100) zur Vorhersage der Verschlechterung in einer mechanischen Einrichtung, wobei das System (100) Folgendes umfasst:

   ein Integritätsmodell (102) für die mechanische Einrichtung, wobei das Integritätsmodell (102) mehrere Integritätszustände enthält, die für die Modellierung der mechanischen Einrichtung ausgelegt sind; und
   einen Zustandsschätzer (104), der dafür ausgelegt ist, periodische Einrichtungsdaten für die mechanische Einrichtung zu empfangen, wobei der Zustandsschätzer (104) ferner dafür ausgelegt ist, auf der Basis der Einrichtungsdaten Werte für die mehreren Integritätszustände zu schätzen, wobei die geschätzten Werte für die mehreren Integritätszustände eine Vorhersage der Verschlechterung in der mechanischen Einrichtung geben,

   wobei das System **dadurch gekennzeichnet ist, dass**
   das Integritätsmodell (102) eine Poisson-Verteilung verwendet, um eine Rate der intrinsischen Beschädigungsakkumulation in der mechanischen Einrichtung zu modellieren; und
   der Zustandsschätzer (104) ein Kalman-Filter enthält, das modifiziert ist, um eine teilweise spezifizierte Verteilung zu benutzen, um eine Schätzung der intrinsischen Beschädigungsakkumulation für zwei Momente der Poisson-Verteilung zu produzieren.

2. System (100) nach Anspruch 1, wobei das Integritätsmodell (102) dafür implementiert wird, Auswirkungen der Beschädigungsakkumulation und den Einfluss diskreter Ereignisse auf die mechanische Einrichtung als additive Variablen zu erfassen, und
   wobei der Einfluss diskreter Ereignisse durch eine Kombination einer Sensitivitätsmatrix und einer binären Variablen, die anzeigt, wann ein diskretes Ereignis aufgetreten ist, erfasst wird.

3. System (100) nach Anspruch 1, wobei das Integritätsmodell (102) eine Systemmatrix zur Beschreibung von Wechselwirkungen zwischen Teilsystemen enthält und wobei die Systemmatrix unter Verwendung von Maximum-likelihood-Schätzung bestimmt wird.

4. System (100) nach Anspruch 1, wobei das Integritätsmodell (102) eine Systemmatrix zur Beschreibung von Wechselwirkungen zwischen Teilsystemen enthält und wobei die Systemmatrix unter Verwendung von Least-squares-Regression bestimmt wird.

5. System (100) nach Anspruch 1, wobei das Integritätsmodell (102) Integritätszustände enthält, die sich in einem linearen Zustandsraum entwickeln, der durch ein Beschädigungsakkumulationselement, die Abweichung von Entwurfsbedingungen in jeder Betriebsart und das Auftreten diskreter Ereignisse beschrieben wird.

6. System (100) nach Anspruch 1, wobei der Zustandsschätzer (104) den Mittelwert und die Varianz der Integritätszustände in dem Integritätsmodell (102) unter Verwendung periodischer Beobachtungen aus der mechanischen Einrichtung schätzt und wobei die periodischen Beobachtungen aus der mechanischen Einrichtung durch Gaußsches Rauschen überlagerte Sensormessungen enthalten.

**7.** System (100) nach Anspruch 1, wobei der Zustandsschätzer (104) durch Integrieren des Integritätsmodells (102) auf eine gewählte zukünftige Zeit zukünftige Zustände des Integritätsmodells (102) schätzt.

**Revendications**

**1.** Système de prédiction de détérioration (100) pour prédire une détérioration dans un dispositif mécanique, le système (100) comprenant :

un modèle de santé (102) du dispositif mécanique, le modèle de santé (102) comportant une pluralité d'états de santé adaptée pour modéliser le dispositif mécanique ; et
un estimateur d'état (104) adapté pour recevoir des données de dispositif périodiques du dispositif mécanique, l'estimateur d'état (104) étant en outre adapté pour estimer des valeurs de la pluralité d'états de santé d'après les données de dispositif, dans lequel les valeurs estimées de la pluralité d'états de santé fournissent une prédiction d'une détérioration dans le dispositif mécanique,
le système étant **caractérisé par le fait que** :

le modèle de santé (102) utile une distribution de Poisson pour modéliser un taux de cumul de dommages intrinsèque dans le dispositif mécanique ; et
l'estimateur d'état (104) comporte un filtre de Kalman modifié pour utiliser une distribution partiellement spécifiée afin de produire une estimation du cumul de dommages intrinsèque pour deux moments de la distribution de Poisson.

**2.** Système (100) selon la revendication 1, dans lequel le modèle de santé (102) est mis en oeuvre pour capturer des effets de cumul de dommages et l'influence d'événements discrets sur le dispositif mécanique comme variables additives, et dans lequel l'influence d'événements discrets est capturée par une combinaison d'une matrice de sensibilité et d'une variable binaire qui indique quand un événement discret s'est produit.

**3.** Système (100) selon la revendication 1, dans lequel le modèle de santé (102) comporte une matrice de système pour décrire des interactions entre des sous-systèmes et dans lequel la matrice de système est déterminée en utilisant l'estimation par vraisemblance maximum.

**4.** Système (100) selon la revendication 1, dans lequel le modèle de santé (102) comporte une matrice de système pour décrire des interactions entre des sous-systèmes et dans lequel la matrice de système est déterminée en utilisant la régression par les moindres carrés.

**5.** Système (100) selon la revendication 1, dans lequel le modèle de santé (102) comporte des états de santé qui évoluent dans un espace d'états linéaire décrit par un élément de cumul de dommages, un écart par rapport aux conditions théoriques à chaque mode opérationnel, et l'occurrence d'événements discrets.

**6.** Système (100) selon la revendication 1, dans lequel l'estimateur d'état (104) estime la moyenne et la variance des états de santé dans le modèle de santé (102) par des observations périodiques depuis le dispositif mécanique, et dans lequel les observations périodiques depuis le dispositif mécanique comportent des mesures de capteur superposées par un bruit gaussien.

**7.** Système (100) selon la revendication 1, dans lequel l'estimateur d'état (104) estime des états futurs du modèle de santé (102) en intégrant le modèle de santé (102) jusqu'à un temps futur sélectionné.

EP 1 777 157 B1

DETERIORATION
PREDICTION SYSTEM

HEALTH MODEL — 102

110

— 104

DEVICE DATA → STATE ESTIMATOR → DETERIORATION
PREDICTION

112

100

# FIG. 1

FIG. 2

EP 1 777 157 B1

**102**

**HEALTH MODEL**

( HEALTH STATE FOR SUBSYSTEM 1 )

( HEALTH STATE FOR SUBSYSTEM 2 )

( HEALTH STATE FOR SUBSYSTEM 3 )

**302**

**STATE ESTIMATOR**

MODIFIED KALMAN FILTER

**304**

( DEVICE BEHAVIOR )

**304**

**DETERIORATION PREDICTION**

( ESTIMATE OF HEALTH STATE FOR SUBSYSTEM 1 )

( ESTIMATE OF HEALTH STATE FOR SUBSYSTEM 2 )

( ESTIMATE OF HEALTH STATE FOR SUBSYSTEM 3 )

300

# FIG. 3

FIG. 4

FIG. 5

EP 1 777 157 B1

PROCESSOR ~110

~180 MEMORY

DETERIORATION
PREDICATION PROGRAM

50

~170

130

INTERFACE

~190

STORAGE
DEVICE

~195

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2345343 A
- EP 1705542 A
- US 20050288901 A, Dinkar Mylaraswamy
- US 20050283909 A, Dinkar Mylaraswamy